(19) Europäisches Patentamt / European Patent Office / Office européen des brevets

(11) **EP 4 512 538 A1**

(12) **EUROPÄISCHE PATENTANMELDUNG**

(43) Veröffentlichungstag:
26.02.2025 Patentblatt 2025/09

(21) Anmeldenummer: 23193429.0

(22) Anmeldetag: **25.08.2023**

(51) Internationale Patentklassifikation (IPC):
*B05D 1/38* (2006.01)   *B05D 3/00* (2006.01)
*C08J 7/043* (2020.01)   *C08J 7/048* (2020.01)
*C09D 125/08* (2006.01)   *C09D 191/06* (2006.01)
*D21H 19/18* (2006.01)   *D21H 19/22* (2006.01)
*D21H 27/10* (2006.01)   *D21H 19/82* (2006.01)

(52) Gemeinsame Patentklassifikation (CPC):
**D21H 27/10; C08J 7/042; C09D 191/06;**
**D21H 19/18; D21H 19/22; D21H 19/82;**
B05D 7/544; B05D 2203/22; C08J 2433/04;
C08J 2491/06; C09D 125/14

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: NGP Licensing UG
82418 Murnau (DE)

(72) Erfinder:
• **UHLIG, Torsten**
**32457 Porta Westfalica (DE)**
• **TROYER, Ralf**
**91161 Hilpotstein (DE)**
• **FREGIN, Mark**
**23626 Ratekau (DE)**

(74) Vertreter: **Müller Schupfner & Partner**
**Patent- und Rechtsanwaltspartnerschaft mbB**
**(Muc)**
**Bavariaring 11**
**80336 München (DE)**

(54) **SUBSTRAT MIT BARRIEREBESCHICHTUNG**

(57)    Es wird ein Verfahren bereitgestellt zum Herstellen eines Substrats mit Barrierebeschichtung, umfassend die Schritte

Aufbringen einer ersten Schicht aus einer ersten Zusammensetzung, umfassend eine wässrige Polymerdispersion und weniger als 0,2 Gew.-% Wachs, auf ein Substrat,

Zwischentrocknen der ersten Schicht bis zu einer definierten freien Oberflächenenergie einer Oberfläche der ersten Schicht,

Aufbringen einer zweiten Schicht aus einer zweiten Zusammensetzung, umfassend eine wässrige Polymerdispersion und 1 - 8 Gew.-% Wachs, auf die Oberfläche der zwischengetrockneten ersten Schicht, und anschließendes Trocknen.

Ferner wird ein Substrat mit Barrierebeschichtung bereitgestellt, erhältlich nach dem Verfahren.

EP 4 512 538 A1

**Beschreibung**

Als Verpackungsmaterialien für zum Beispiel Lebensmittel werden häufig Verbundmaterialien aus Folien eingesetzt, zum Beispiel Polyethylenfolien auf Papier oder Karton. Diese lassen sich jedoch in der Regel nicht recyclen und müssen aussortiert und anschließend verbrannt werden.

Als Verpackungsmaterialien sind auch Papier- oder Kartonverpackungen aus mineralölbelastetem, recyceltem Papier mit einer Barriereschicht aus Kunststoff bekannt, beispielsweise aus der EP 2 714 990 A1. Die Barriereschicht soll zum einen verpackte Materialien, beispielsweise Lebensmittel, vor Kontaminationen mit beispielsweise Mineralölresten schützen als auch das Eindringen von Wasser, Wasserdampf und Fetten in das Papier und den Karton vermeiden. Diese Verpackungsmaterialien mit Barriereschicht haben jedoch den Nachteil, dass die Barriereschicht entweder nur unzureichend an dem beschichtenden Substrat aus Papier oder Karton haftet oder hohe Auftragsmengen und damit viel Beschichtungsmaterial eingesetzt werden muss, um eine ausreichende Barrierewirkung zu erreichen. Darüber hinaus sind mit diesen Barrierebeschichtungen unbehandelte Papiere, zum Beispiel auf der Basis baumfreier Zellulose, aufgrund der offenporigen, saugenden Materialeigenschaften oft nur unzureichend siegelfähig. Zudem erreichen die bekannten Materialien mit Barrierebeschichtungen nicht gleichzeitig hohe Barrierewirkungen gegen Wasser, Wasserdampf und Fett, sind siegelfähig und recyclebar. Unter Siegelfähigkeit wird verstanden, dass die beschichtete Seite nicht verklebt werden muss, sondern durch Erwärmen oder Ultraschall verbindbar ist (Heißsiegelung oder Ultraschall-Siegelung). Die meisten bekannten Barrierebeschichtungen sind nicht geeignet für eine Siegelung.

Aufgabe der Erfindung ist es daher, die oben genannten Nachteile zu überwinden und ein Verfahren zum Beschichten eines Substrats, insbesondere von Papier oder Karton, und ein dadurch erhältliches Substrat mit Barrierebeschichtung zur Verfügung zu stellen, dass gleichzeitig hohe Barrierewirkungen gegen Wasser, Wasserdampf und Fett aufweist, siegelfähig und recyclebar ist, insbesondere bei geringem Materialauftrag des Beschichtungsmaterials und auch auf offenporige Substrate anwendbar ist.

Gelöst wird diese Aufgabe durch ein Verfahren gemäß Anspruch 1, ein Substrat mit Barrierebeschichtung erhältlich nach diesem Verfahren nach Anspruch 12 und ein Substrat mit Barrierebeschichtung nach Anspruch 13. Weitere Merkmale, Ausführungsformen sowie Vorteile ergeben sich aus den abhängigen Ansprüchen und der Beschreibung.

Ein Aspekt der Erfindung betrifft ein Verfahren zum Herstellen eines Substrats mit Barrierebeschichtung, umfassend die Schritte:

a) Aufbringen einer ersten Schicht aus einer ersten Zusammensetzung, umfassend eine wässrige Polymerdispersion und weniger als 0,2 Gew.-% Wachs, bezogen auf das Gesamtgewicht der ersten Zusammensetzung, auf ein Substrat,

b) Zwischentrocknen der ersten Schicht bis zu einer freien Oberflächenenergie einer Oberfläche der ersten Schicht von 30 - 50 mN/m und einem polaren Anteil der freien Oberflächenenergie von 3 - 5 mN/m, wobei die freie Oberflächenenergie und der polare Anteil der freien Oberflächenenergie gemessen werden mit der Methode nach Owens, Wendt, Rabel und Kaelble mit einem Krüss-MSA-Messgerät,

c) Aufbringen einer zweiten Schicht aus einer zweiten Zusammensetzung, umfassend eine wässrige Polymerdispersion und 1 - 8 Gew.-% Wachs, bezogen auf das Gesamtgewicht der zweiten Zusammensetzung, auf die Oberfläche der zwischengetrockneten ersten Schicht,

d) Trocknen des beschichteten Substrats aus Schritt c).

Ein weiterer Aspekt der Erfindung betrifft ein Substrat mit Barrierebeschichtung, erhältlich nach dem erfindungsgemäßen Verfahren.

Die Erfindung betrifft auch ein Substrat mit Barrierebeschichtung, umfassend Substrat mit Barrierebeschichtung, umfassend

ein Substrat,
eine unmittelbar auf der Oberfläche des Substrats aufgebrachte erste Schicht, umfassend ein Polymer und weniger als 0,5 Gew.-% Wachs, bezogen auf das Gesamtgewicht der ersten Schicht, und einer Schichtdicke der ersten Schicht von 2 - 7 $\mu$m, und eine unmittelbar auf die erste Schicht aufgebrachte zweite Schicht, umfassend ein Polymer und 2 - 20 Gew.-% Wachs, bezogen auf das Gesamtgewicht der zweiten Schicht, und einer Schichtdicke der zweiten Schicht von 2 - 7 $\mu$m.

Überraschenderweise ergibt das erfindungsgemäße Verfahren ein mit Barrierebeschichtung beschichtetes Substrat (Träger), das sehr gut recyclebar ist und eine hervorragende Barrierewirkung gegen Wasser, Wasserdampf und Fett aufweist (Multi-Barriere-Beschichtung), selbst bei geringem Materialauftrag beziehungsweise geringer Dicke der Barrierebeschichtung. Erreicht wird dies insbesondere durch eine Kombination aus einer ersten Schicht mit keinem oder wenig Wachs für eine gute Haftung auf dem Substrat und einer zweiten Schicht mit Wachs für eine gute Barrierewirkung. Ein zentrales Merkmal des erfindungsgemäßen Verfahrens ist die Zwischentrocknung, die zu einer besonders guten Haftung zwischen der ersten und der zweiten Schicht führt. Zudem ist das erhältliche Substrat mit Barrierebeschichtung siegelfähig, insbesondere heißsiegelfähig und durch Ultraschall siegelfähig. Die Siegelung kann sowohl Barrierebeschichtung auf Barrierebeschichtung (Lack gegen Lack) als auch Barrierebeschichtung auf Substrat (Lack gegen Substrat) erfolgen.

Das nach dem erfindungsgemäßen Verfahren erhältliche Substrat mit Barrierebeschichtung kann in einem sehr breiten Temperaturbereich von -40°C (z.B. TK-Produkte) bis zu 140°C (z.B. Kaffeebecher, Fastfood) eingesetzt werden. Es ist auf praktisch alle Papiere und Kartonagen anwendbar, insbesondere auch auf ungestrichene (nachhaltige) Natur- und Recyclingmaterialien, aber auch auf Kunststoffmaterialien. Das nach dem erfindungsgemäßen Verfahren erhältliche Substrat mit Barrierebeschichtung ist eine recyclebare und nachhaltige Alternative zu PE beschichteten Verbundmaterialien und Plastikverpackungen. Das nach dem erfindungsgemäßen Verfahren erhältliche Substrat mit Barrierebeschichtung deckt ein sehr großes Einsatzspektrum ab, zum Beispiel für Flowpacks oder Tüten für feuchte oder fettende Lebensmittel, Trinkbecher, Fastfood-Verpackungen aller Art, Faltschachteln für Tiefkühlkost etc.

Mit dem erfindungsgemäßen Verfahren kann eine Seite des Substrats beschichtet werden, beispielsweise eines Papiers oder Kartons, oder es können beide Seiten beschichtet werden. Vorzugsweise wird eine Seite beschichtet.

Im Rahmen der Erfindung wurde festgestellt, dass bei einer zu starken oder vollständigen Trocknung der ersten Schicht die Oberflächenspannung beziehungsweise die freie Oberflächenenergie zu stark sinkt und auch der polare Anteil der freien Oberflächenenergie zu stark absinkt, wodurch ein gleichmäßiger Auftrag der zweiten Schicht auf der ersten Schicht aufgrund unzureichender Benetzung nicht mehr möglich ist beziehungsweise die Haftung zwischen erster und zweiter Schicht unzureichend wird. Es wurde gefunden, dass der Zwischentrocknungsschritt vorteilhafterweise bis zu einer freien Oberflächenenergie der Oberfläche der ersten Schicht von 30 - 50 mN/m und einem polaren Anteil der freien Oberflächenenergie von 3 - 5 mN/m durchgeführt wird. Auf diese Art und Weise dient die Oberfläche der ersten Schicht als eine Art polare Brücke für die zweite Schicht. Das Resultat ist eine sehr gute Haftung der zweiten Schicht auf der ersten Schicht. Dadurch wird eine maximal verfilmte geschlossene Oberfläche des Substrats mit hervorragender Barrierewirkung erreicht, bei gleichzeitig minimaler Auftragsstärke von erster und zweiter Schicht.

Die Barrierewirkung im Sinne der Erfindung bezieht sich insbesondere auf Wasser, Wasserdampf, Fett und Sauerstoff. Bei Verwendung des erfindungsgemäßen Substrats mit Barrierebeschichtung beispielsweise als Verpackungsmaterial hat dies den Vorteil, dass Rückstände im Substratmaterial, beispielsweise Mineralölrückstände in recyceltem Papier oder Karton, nicht in das verpackte Material wie beispielsweise Lebensmittel übergehen und von außen kein Sauerstoff eindringt, was zum Beispiel bei Lebensmitteln das Aroma verschlechtert. Ferner geht kein Wasser beziehungsweise Wasserdampf und auch kein Fett in das Verpackungsmaterial über und verschlechtert dadurch die Eigenschaften des Verpackungsmaterials. Das Verfahren ist sowohl für Papier und Kartonagen als auch auf Folienmaterialien oder Kunststoffmaterialien als Substrate anwendbar. Die erhältlichen Substrate mit Barrierebeschichtung sind sowohl für den Lebensmittelbereich als auch für den Nicht-Lebensmittelbereich einsetzbar.

Das mit dem erfindungsgemäßen Verfahren erhältliche Substrat mit Barrierebeschichtung (Barrierebeschichtung) ist hervorragend recyclebar und genügt den Anforderungen der EU-Verpackungsrichtlinie 94/62/EG, wonach Rohstoffe wiederverwendet werden sollen und die Recyclingquote aller Verpackungsabfälle bis 2030 auf 70 % zu steigern ist.

Anwendbar ist das erfindungsgemäße Verfahren bevorzugt auf Recyclingpapier und -karton, Substrate in Form unbehandelter Papiere, besonders bevorzugt auf Basis von baumfreier Zellulose, beispielsweise aus landwirtschaftlichen Abfällen wie Hanf oder Bagasse (Zuckerrohr) oder Bambuspapier. Offenporige, saugende Materialien lassen sich mit herkömmlichen Beschichtungstechniken oder Lackiertechniken in der Regel nicht oder nur unzureichend mit Barriereschichten versehen.

Die Schritte des Verfahrens werden nacheinander in der angegebenen Reihenfolge a), b), c), d) durchgeführt.

In einer bevorzugten Ausführungsform ist das Substrat aus Papier, Karton, Kunststoff oder einer Kombination davon. Eine Kombination ist vorzugsweise ein Verbundmaterial aus Papier, Karton und/oder Kunststoff. Weiter bevorzugt handelt es sich um Papier oder Karton, am meisten bevorzugt um Papier oder Karton aus Recyclingmaterial und/oder baumfreier Zellulose, beispielsweise Hanf, Zuckerrohr, Bambus.

Im ersten Schritt a) des erfindungsgemäßen Verfahrens wird eine erste Schicht aus einer ersten Zusammensetzung auf ein Substrat aufgebracht, wobei die erste Zusammensetzung eine wässrige Polymerdispersion und weniger als 0,2 Gew.-% Wachs umfasst, bezogen auf das Gesamtgewicht der ersten Zusammensetzung. Im Schritt c) wird eine zweite Schicht aus einer zweiten Zusammensetzung aufgebracht, wobei die zweite Zusammensetzung eine wässrige Polymerdispersion und 1 - 8 Gew.-% Wachs, bezogen auf das Gesamtgewicht der zweiten Zusammensetzung, umfasst. Die erste Zusammensetzung umfasst vorzugsweise eine wässrige Polymerdispersion und weniger als 0,1 Gew.-% Wachs, besonders bevorzugt weniger als 0,05 Gew.-% Wachs, bezogen auf das Gesamtgewicht der ersten Zusammensetzung.

Die zweite Zusammensetzung umfasst vorzugsweise eine wässrige Polymerdispersion und 1 - 7 Gew.-% Wachs, weiter bevorzugt 1,5 - 5 Gew.-% Wachs, besonders bevorzugt 2 - 4 Gew.-% Wachs, bezogen auf das Gesamtgewicht der zweiten Zusammensetzung.

Ein Wachs im Sinne der Erfindung ist wie üblich ein Gemisch verschiedener Kohlenwasserstoffe, die bei über etwa 40 °C schmelzen. Wachse sind nahezu unlöslich in Wasser, und löslich in organischen, unpolaren Lösungsmitteln. Unterteilt werden Wachse in der Regel in natürlich und synthetische Wachse und bei den natürlichen Wachsen wird unterschieden zwischen tierischen, pflanzlichen und mineralischen Wachsen. Erfindungsgemäß bevorzugt ist der Wachs ein pflanzlicher Wachs oder eine Mischung pflanzlicher Wachse. Besonders bevorzugt sind Zuckerrohrwachs, Carnaubawachs, Candelillawachs, Korkwachs, Guarumawachs, Palmenwachs, Baumwollwachs, Reiskleiewachs, Flachswachs, Torfwachs, Rosenwachs, Jasminwachs, Myrtewachs, Polyamidwachs, PP Wachs (Polypropylenwachs), PE Wachs (Polyethylenwachs), Ouricuriwachs, Fischer Tropsch Wachs, Wachsfeigenwachs und Mischungen daraus. Mit diesen Wachsen lassen sich besonders gute Barrierewirkungen erzielen.

Das Polymer der wässrigen Polymerdispersion der ersten und zweiten Zusammensetzung kann gleich oder verschieden sein. Vorzugsweise ist es gleich. Das Polymer der wässrigen Polymerdispersion ist vorzugsweise ein thermoplastisches Polymer, weiter bevorzugt ein (Meth)acrylat-Polymer, (Meth)acrylat-Copolymer oder Polyvinylalkohol, noch weiter bevorzugt ein (Meth)acrylat-Olefin-Copolymer oder Polyvinylalkohol, besonders bevorzugt ein Copolymer aus (Meth)acrylat und Styrol oder einem Styrol-Derivat. Unter (Meth)acrylat wird wie üblich Acrylat, Methacrylat oder Acrylat-Methacrylat verstanden.

Die erste und/oder zweite Zusammensetzung hat vorzugsweise einen pH-Wert von 7 - 9,5, weiter bevorzugt 8 - 9. Der Feststoffgehalt der ersten Zusammensetzung und/oder der zweiten Zusammensetzung ist bevorzugt 25 - 50 Gew.-%, weiter bevorzugt 35 - 45 Gew.-% und am meisten bevorzugt 38 - 42 Gew.-%. Die TG (Glasübergangstemperatur) des Polymers der ersten und/oder zweiten Zusammensetzung ist vorzugsweise 0 - 60 °C, weiter bevorzugt 0 - 40 °C und besonders bevorzugt 3 - 10 °C. Mit diesen Polymeren lassen sich besonders gute Haftungen auf den Untergründen und zwischen den zwei Schichten sowie besonders gute Barrierewirkungen in Kombination mit den obigen Wachsen erzielen.

Das Zwischentrocknen der ersten Schicht im Schritt b) des erfindungsgemäßen Verfahrens erfolgt bis zu einer freien Oberflächenenergie der Oberfläche der ersten Schicht von 30 - 50 mN/m und einem polaren Anteil der freien Oberflächenenergie von 3 - 5 mN/m. Die Einheit mN/m (Millinewton pro Meter) entspricht der Energie pro Oberfläche in mJ/m$^2$ (Millijoule pro Quadratmeter) und wird regelmäßig in mN/m angegeben.

In einer bevorzugten Ausführungsform der Erfindung erfolgt das Zwischentrocknen der ersten Schicht bis zu einer freien Oberflächenenergie der Oberfläche der ersten Schicht von 35 - 45 mN/m und einem polaren Anteil der freien Oberflächenenergie von 3,5 - 4,5 mN/m.

Besonders bevorzugt erfolgt das Zwischentrocknen der ersten Schicht bis zu einer freien Oberflächenenergie der Oberfläche der ersten Schicht von 38 - 42 mN/m und einem polaren Anteil der freien Oberflächenenergie von 3,8 - 4,2 mN/m. Dies ermöglicht eine besonders gute Haftung zwischen der ersten und zweiten Schicht und eine besonders einheitliche Ausbildung der zweiten Schicht, selbst bei geringem Materialauftrag. Weiter ist es bevorzugt, dass der disperse Anteil der Oberflächenenergie der ersten Schicht an der Oberfläche nach dem Zwischentrocknen ≥ 32 mN/m, weiter bevorzugt ≥ 35 mN/m beträgt.

Die freie Oberflächenenergie und der polare Anteil der freien Oberflächenenergie als auch der disperse Anteil der freien Oberflächenenergie werden gemessen nach der Methode gemäß der Methode nach Owens, Wendt, Rabel und Kaelble mit einem Krüss-MSA-Messgerät (MSA = Mobile Surface Analyzer der Firma Krüss), beispielsweise mit einem MSA Flexible Liquid Messgerät von Krüss.

Die Methode nach Owens, Wendt, Rabel und Kaelble ist eine Standardmethode zur Bestimmung der freien Oberflächenenergie der Oberfläche eines Festkörpers mit Hilfe des Kontaktwinkels mit mehreren Flüssigkeiten. Die freie Oberflächenenergie spaltet man dabei in einen polaren Anteil und einen dispersen Anteil auf.

Der Hintergrund dieses Messverfahrens ist ein Zusammenhang zwischen dem Kontaktwinkel $\theta$, der Oberflächenspannung der Flüssigkeit $\sigma_l$, der Grenzflächenspannung $\sigma_{sl}$ zwischen Flüssigkeit und Festkörper sowie der freien Oberflächenenergie $\sigma_s$ des Festkörpers:

$$\sigma_s = \sigma_{sl} + \sigma_l \cdot \cos\theta$$

Um die freie Oberflächenenergie aus dem Kontaktwinkel berechnen zu können, wird die zweite unbekannte Größe $\sigma_{sl}$ ermittelt.

Die Grenzflächenspannung $\sigma_{sl}$ wird mit Hilfe der beiden Oberflächenspannungen $\sigma_s$ und $\sigma_l$, und der gleichartigen Wechselwirkungen zwischen den Phasen berechnet. Diese Wechselwirkungen werden als geometrischer Mittelwert eines dispersiven Anteils $\sigma^D$ und eines polaren Anteils $\sigma^P$ der Oberflächenspannung bzw. freien Oberflächenenergie bestimmt:

$$\sigma_{sl} = \sigma_s + \sigma_l - 2\left(\sqrt{\sigma_s^D \cdot \sigma_l^D} + \sqrt{\sigma_s^P \cdot \sigma_l^P}\right)$$

Zur Messung der freien Oberflächenenergie des Festkörpers werden mindestens zwei Flüssigkeiten mit bekannten dispersiven und polaren Anteilen der Oberflächenspannung benötigt, wobei mindestens eine der Flüssigkeiten einen polaren Anteil > 0 aufweisen muss.

Die Grenzflächenspannung hängt nach dem Zweikomponentenmodell davon ab, ob polare und dispersive Anteile mit entsprechenden Anteilen der angrenzenden Phase Wechselwirkungen ausbilden können. Zum Beispiel wird die Grenzflächenspannung gegenüber der polaren Flüssigkeit Wasser kleiner, wenn der Festkörper ebenfalls polar ist. Ist der polare Anteil beim Festkörper hingegen niedrig, nimmt der Wurzelterm $(\sigma P_l \cdot \sigma P_s)^{1/2}$ einen kleinen Wert an. Die polaren Wechselwirkungen liefern dann nur einen geringen Beitrag zur Verringerung der Grenzflächenspannung. Das entspricht einer schlechten Benetzung und einem hohen Kontaktwinkel.

Wie oben beschrieben führt die Zwischentrocknung bis zu den genannten Werten der freien Oberflächenenergie und des polaren Anteils der freien Oberflächenenergie dazu, dass eine ausreichende freie Oberflächenenergie auf der Oberfläche der ersten Schicht übrigbleibt, um eine gute Haftung der zweiten Schicht auf der Oberfläche der ersten Schicht zu ermöglichen. Dadurch wird beim Aufbringen der zweiten Schicht aus der zweiten Zusammensetzung ein gleichmäßiger Auftrag über eine ausreichende Benetzung erreicht. Es dient das verbleibende Wasser in der zwischengetrockneten, d. h. teilweise getrockneten ersten Schicht, als eine Art polare Brücke für die zweite Schicht.

Bevorzugt erfolgt die Zwischentrocknung im Schritt b) bei einer Temperatur von 20 - 60 °C, bevorzugt 30 - 50 °C, besonders bevorzugt 35 - 45 °C. Das Trocknen erfolgt vorzugsweise für 0,03 - 0,9 s (Sekunden), bevorzugt 0,06 - 0,6 s, besonders bevorzugt 0,1 - 0,3 s. Die Zwischentrocknung erfolgt bevorzugt als Heißlufttrocknung.

Das erfindungsgemäße Verfahren betrifft daher auch ein Verfahren zum Herstellen eines Substrats mit Barrierebeschichtung, umfassend die Schritte:

a) Aufbringen einer ersten Schicht aus einer ersten Zusammensetzung, umfassend eine wässrige Polymerdispersion und weniger als 0,2 Gew.-% Wachs, bezogen auf das Gesamtgewicht der ersten Zusammensetzung, auf ein Substrat,

b) Zwischentrocknen der ersten Schicht bei einer Temperatur von 20 - 60 °C, bevorzugt 30 - 50 °C, besonders bevorzugt 35 - 45 °C, für 0,03 - 0,9 s, bevorzugt 0,06 - 0,6 s, besonders bevorzugt 0,1 - 0,3 s,

c) Aufbringen einer zweiten Schicht aus einer zweiten Zusammensetzung, umfassend eine wässrige Polymerdispersion und 1 - 8 Gew.-% Wachs, bezogen auf das Gesamtgewicht der zweiten Zusammensetzung, vorzugsweise 1 - 7 Gew.-% Wachs, auf die Oberfläche der zwischengetrockneten ersten Schicht,

d) Trocknen des beschichteten Substrats aus Schritt c).

Das Aufbringen der ersten Schicht im Schritt a) wird vorzugsweise im Flexodruckverfahren durchgeführt. Dabei kommt eine Walze wie beispielsweise eine Rasterwalze zum Einsatz. Die Oberfläche der Walze ist vorzugsweise ein kompressibler Werkstoff (Sleeve, Lackplatte). Die Walze hat an der Oberfläche vorzugsweise eine Shore-Härte von 40 - 60 Shore A, vorzugsweise 45 - 50 Shore A. Die Oberflächenrauigkeit des Werkstoffs der Walze beträgt vorzugsweise $R_a$ = 0,4 - 0,6 und $R_z$ = 4 -6.

Bei rauen und/oder offenporigen Substraten kann es vorteilhaft sein, nach dem Zwischentrocknen und vor dem Aufbringen der zweiten Schicht ein mechanisches Komprimieren der zwischengetrockneten ersten Schicht durchzuführen. Dies erfolgt bevorzugt mit einer Walze, weiter bevorzugt mit einer Kalandrierwalze. Das mechanische Komprimieren der zwischengetrockneten ersten Schicht sorgt dafür, dass die erste Schicht in Unebenheiten des Substrats gedrückt wird und die gesamte Oberfläche verdichtet und für die Beschichtung mit der zweiten Schicht vorbereitet wird.

Das Aufbringen der zweiten Schicht im Schritt c) wird vorzugsweise im Flexodruckverfahren, Semi-Flexodruckverfahren oder Siebdruck durchgeführt, insbesondere im Flexodruckverfahren. Dabei kommt eine Walze wie beispielsweise eine Rasterwalze zum Einsatz.

Beim Aufbringen der zweiten Schicht aus einer zweiten Zusammensetzung auf der zwischengetrockneten ersten Schicht weist die zwischengetrocknete erste Schicht zum Zeitpunkt des Aufbringens der zweiten Schicht bevorzugt eine freie Oberflächenenergie von 30 - 50 mN/m und einen polaren Anteil der freien Oberflächenenergie von 3 - 5 mN/m auf. Weiter bevorzugt weist die zwischengetrocknete erste Schicht an der Oberfläche zum Zeitpunkt des Aufbringens der zweiten Schicht eine freie Oberflächenenergie von 35 - 45 mN/m und einen polaren Anteil der freien Oberflächenenergie von 3,5 - 4,5 mN/m auf. Besonders bevorzugt weist die zwischengetrocknete erste Schicht an der Oberfläche zum Zeitpunkt des Aufbringens der zweiten Schicht eine freie Oberflächenenergie von 38 - 42 mN/m und einen polaren Anteil der freien Oberflächenenergie von 3,8 - 4,2 mN/m auf. Dies ermöglicht eine besonders gute Haftung zwischen der ersten und zweiten Schicht und eine besonders einheitliche Ausbildung der zweiten Schicht, selbst bei geringem Materialauftrag. Weiter ist es bevorzugt, dass der disperse Anteil der Oberflächenenergie der ersten Schicht an der Oberfläche zum Zeitpunkt des Aufbringens der zweiten Schicht $\geq$ 32 mN/m, weiter bevorzugt $\geq$ 35 mN/m ist.

Bevorzugt ist daher ein Verfahren zum Herstellen eines Substrats mit Barrierebeschichtung, umfassend die Schritte:

a) Aufbringen einer ersten Schicht aus einer ersten Zusammensetzung, umfassend eine wässrige Polymerdispersion und weniger als 0,2 Gew.-% Wachs, bezogen auf das Gesamtgewicht der ersten Zusammensetzung, auf ein Substrat,

b) Zwischentrocknen der ersten Schicht bis zu einer freien Oberflächenenergie einer Oberfläche der ersten Schicht von 30 - 50 mN/m und einem polaren Anteil der freien Oberflächenenergie von 3 - 5 mN/m, wobei die freie Oberflächenenergie und der polare Anteil der freien Oberflächenenergie gemessen werden mit der Methode nach Owens, Wendt, Rabel und Kaelble mit einem Krüss-MSA-Messgerät,

c) Aufbringen einer zweiten Schicht aus einer zweiten Zusammensetzung, umfassend eine wässrige Polymerdispersion und 1 - 8 Gew.-% Wachs, bezogen auf das Gesamtgewicht der zweiten Zusammensetzung, auf die Oberfläche der zwischengetrockneten ersten Schicht, wobei die zwischengetrocknete erste Schicht zum Zeitpunkt des Aufbringens der zweiten Schicht eine freie Oberflächenenergie von 30 - 50 mN/m und einen polaren Anteil der freien Oberflächenenergie von 3 - 5 mN/m aufweist,

d) Trocknen des beschichteten Substrats aus Schritt c).

Im erfindungsgemäßen Verfahren wird bevorzugt beim Aufbringen der ersten Schicht und/oder beim Aufbringen der zweiten Schicht eine Menge von 3 - 20 g/m$^2$, weiter bevorzugt 5 - 16 g/m$^2$, noch weiter bevorzugt 7 - 14 g/m$^2$ und am meisten bevorzugt 8 - 12 g/m$^2$ der Zusammensetzung (der ersten Zusammensetzung oder der zweiten Zusammensetzung) aufgebracht.

Das Trocknen im Schritt d) (Endtrocknung) erfolgt bevorzugt bei einer Temperatur von 20 - 100 °C, weiter bevorzugt 50 - 90 °C besonders bevorzugt 70 - 80 °C. Bevorzugt wird im Schritt c) für 2 bis 48 h, besonders bevorzugt 4 bis 24 h getrocknet. Das Trocknen im Schritt d) (Endtrocknung) erfolgt besonders bevorzugt als Heißlufttrocknung.

Nach dem Trocknen ist die Schichtdicke der ersten Schicht 2 - 7 μm, bevorzugt 3 - 6 μm, besonders bevorzugt 3,5 - 5 μm. Die Schichtdicke der zweiten Schicht ist nach dem 2 - 7 μm, bevorzugt 3 - 6 μm, besonders bevorzugt 3,5 - 5 μm.

Die Schichtdicke wird bestimmt, indem die Höhe der Schicht in einem Querschnitt gemessen wird, beispielsweise unter einem Lichtmikroskop. Dazu die Schichtdicken an mindestens drei Stellen, vorzugsweise drei bis fünf Stellen ermittelt und der arithmetische Mittelwert bestimmt. Dies ist dann die Schichtdicke, die auch als mittlere Schichtdicke bezeichnet werden kann.

Das erfindungsgemäße Verfahren liefert ein Substrat mit Barrierebeschichtung, welches sehr gut versiegelt ist, hitzefest bis 140 °C und tiefkühlgeeignet bis -40°C. Das nach dem erfindungsgemäßen Verfahren erhältliche Substrat mit Barrierebeschichtung kann eine Fettbarriere von KIT 12 und/oder eine Wasserdampfbarriere (MVTR) von 15 g/m$^2$d bis 20 g/m$^2$d und/oder es können Cobbwerte (Cobb 1.800) von mindestens 0,8 g/qm bis 2 g/qm oder besser erreicht werden (gemessen MVTR nach DIN 53122, Cobbwert nach DIN EN 20535 und KIT nach ISO 16532-2). Diese Werte sind den bekannten Barrierebeschichtungen überlegen oder sie werden aber bei bekannten wasserbasierten Barrierebeschichtungen nur mit deutlich dickeren Beschichtungen erreicht.

Die Erfindung betrifft auch ein Substrat mit Barrierebeschichtung, erhältlich nach dem erfindungsgemäßen Verfahren. Die beim erfindungsgemäßen Verfahren beschriebenen bevorzugten und besonders bevorzugten Ausführungsformen sind auch bei dem nach dem erfindungsgemäßen Verfahren erhältlichen Substrat mit Barrierebeschichtung bevorzugt und besonders bevorzugt.

Das nach dem erfindungsgemäßen Verfahren erhältliche Substrat mit Barrierebeschichtung zeichnet sich insbesondere durch die Merkmale aus, dass die erste Schicht einen geringen Wachsanteil und die zweite Schicht einen hohen Wachsanteil aufweist. Dadurch wird die Haftung der ersten Schicht am Substrat verbessert, insbesondere an polaren Substraten wie Papieren, Kartonagen oder Polymeren, die polare Gruppen aufweisen. Der hohe Wachsanteil der zweiten Schicht sorgt insbesondere für eine gute Barrierewirkung der Beschichtung. Diese beiden Schichten weisen aufgrund des stark unterschiedlichen Wachsanteils eine unterschiedliche Hydrophilie bzw. Hydrophobie auf. Dies erschwert grundsätzlich die Haftung der Schichten aneinander. Die hervorragende Haftung wird erfindungsgemäß durch den Zwischentrocknungsschritt erreicht, weil die nur teilweise Trocknung einen Wasseranteil in der ersten Schicht als eine Art polare Brücke für die zweite Schicht zurücklässt. Das nach dem erfindungsgemäßen Verfahren erhältliche Substrat mit Barrierebeschichtung zeichnet sich daher durch eine besonders gute Haftung zwischen der ersten und der zweiten Schicht aus, wie sie aufgrund der Inhaltsstoffe, insbesondere des unterschiedlich hohen Wachsanteils, nicht zu erwarten wäre.

Die Erfindung betrifft auch ein Substrat mit Barrierebeschichtung, umfassend Substrat mit Barrierebeschichtung, umfassend

ein Substrat,
eine unmittelbar auf der Oberfläche des Substrats aufgebrachte erste Schicht, umfassend ein Polymer und weniger als 0,5 Gew.-% Wachs, bezogen auf das Gesamtgewicht der ersten Schicht, und einer Schichtdicke der ersten Schicht von 2 - 7 μm, und eine unmittelbar auf die erste Schicht aufgebrachte zweite Schicht, umfassend ein Polymer und 2 - 20 Gew.-% Wachs, bezogen auf das Gesamtgewicht der zweiten Schicht, und einer Schichtdicke der zweiten Schicht von 2 - 7 μm.

Die Schichtdicke der ersten Schicht ist bevorzugt 3 - 6 μm, besonders bevorzugt 3,5 - 5 μm. Die Schichtdicke der zweiten Schicht ist bevorzugt 3 - 6

μm, besonders bevorzugt 3,5 - 5 μm.

Auch beim Substrat mit Barrierebeschichtung gemäß der Erfindung ist das Polymer bevorzugt ein Copolymer aus (Meth)acrylat und Styrol oder einem Styrol-Derivat. Das Substrat ist vorzugsweise aus Papier, Karton, Kunststoff oder Kombination daraus. Bevorzugt sind Papier oder Karton aus baumfreier Zellulose.

Es versteht sich, dass die vorstehend genannten und nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Die genannten Vorteile von Merkmalen oder von Kombinationen mehrerer Merkmale sind lediglich beispielhaft und können alternativ oder kumulativ zur Wirkung kommen. Die Kombination von Merkmalen unterschiedlicher Ausführungsformen der Erfindung oder von Merkmalen von unterschiedlichen Patentansprüchen ist abweichend von den gewählten Rückbezügen der Patentansprüche möglich. Im Folgenden wird die Erfindung anhand der Beispiele weiter erläutert.

BEISPIELE

Beispiel 1:

Es wird ein 90 g/m$^2$ Zuckerrohrpapier in einer Bahnbreite von 1,80 m einseitig mit dem Verfahren der Erfindung beschichtet (Fischer & Krecke Zentralzylinder-Flexodruckmaschine). Die Druckmaschine produziert mit einer Geschwindigkeit von 200 m/min.

Das beschichtete Material ist Bestandteil einer Rundwickeldose, welche aus einem 3-lagigen Verbund von 90 g/m$^2$ Zuckerrohrpapier besteht. Davon wird die innere Lage - mit Kontakt zum Füllgut - mit der Barrierebeschichtung ausgestattet. Die Stabilität der Dose wird durch die Heißsiegeleigenschaften und der dadurch entstehenden Verklebung im Wickelprozess sichergestellt.

Erste Schicht:

Druckwerk 1: Auftrag der ersten Zusammensetzung (Primer) aus einer wässrige Polymerdispersion und weniger als 0,2 Gew.-% Wachs auf Basis eines Acrylat/Methacrylat-Styrol-Copolymers. Der Lackauftrag erfolgt mittels Rasterwalze mit einem theoretischen Schöpfvolumen von 15 cm$^3$/m$^2$ und Lackübertrag mittels Klischee/Sleeve.
Druckwerk 2: analoger Einsatz wie in Druckwerk 1. Alternativ wird eine Druckwalze mit einem theoretischen Schöpfvolumen von 30 cm$^3$/m$^2$ eingesetzt werden

Die Zwischentrocknung wird in einem Regelbereich von 35 bis 50°C eingestellt, um die ideale Oberflächenspannung beim Primer sicherzustellen (freien Oberflächenenergie der Oberfläche der ersten Schicht von etwa 40 mN/m und einem polaren Anteil der freien Oberflächenenergie von etwa 4 mN/m, gemessen nach der Methode nach Owens, Wendt, Rabel und Kaelble mit einem Krüss-MSA-Messgerät).

Zweite Schicht:

Im separaten Druckwerk: Auftrag der zweiten Zusammensetzung (Barrierelack) aus einer wässrige Polymerdispersion und 4 Gew.-% Wachs auf Basis wässriger Acrylat/Methacrylat-Styrol Co-Polymere. Lackauftrag erfolgt mittels Rasterwalze mit einem theoretischen Schöpfvolumen von 30 cm$^3$/m$^2$ und Lackübertrag mittels Klischee/Sleeve.

Die Trocknung des Barrierelacks erfolgt über die Endtrocknung der Anlage (Heißlufttrocknung). Die Temperatur ist auf 80 bis 90°C eingestellt.

BEISPIEL 2:

Ablauf analog zu Beispiel 1:

Druckmaschine: Flexodruckmaschine Uteco
Material: 45g/m$^2$ Kraftpapier weiß
Breite der Papierrolle: 1.000mm
Beschichtung: einseitig
Verwendung/Produkt: Flowpacks für Tüten für Nusskernmischungen (fettender Inhalt)
erste Schicht / Lackauftrag 1: Rasterwalze mit theoretischem Schöpfvolumen von 18 cm$^3$/m$^2$, Polymer wie in Beispiel 1
Zwischentrocknung (wie in Beispiel 1)
zweite Schicht / Lackauftrag 2: Rasterwalze mit theoretischem Schöpfvolumen von 18 cm$^3$/m$^2$, Polymer wie in Beispiel 1

**Patentansprüche**

1. Verfahren zum Herstellen eines Substrats mit Barrierebeschichtung, umfassend die Schritte:

    a) Aufbringen einer ersten Schicht aus einer ersten Zusammensetzung, umfassend eine wässrige Polymerdispersion und weniger als 0,2 Gew.-% Wachs, bezogen auf das Gesamtgewicht der ersten Zusammensetzung, auf ein Substrat,
    b) Zwischentrocknen der ersten Schicht bis zu einer freien Oberflächenenergie einer Oberfläche der ersten Schicht von 30 - 50 mN/m und einem polaren Anteil der freien Oberflächenenergie von 3 - 5 mN/m, wobei die freie Oberflächenenergie und der polare Anteil der freien Oberflächenenergie gemessen werden mit der Methode nach Owens, Wendt, Rabel und Kaelble mit einem Krüss-MSA-Messgerät,
    c) Aufbringen einer zweiten Schicht aus einer zweiten Zusammensetzung, umfassend eine wässrige Polymerdispersion und 1 - 8 Gew.-%

Wachs, bezogen auf das Gesamtgewicht der zweiten Zusammensetzung, auf die Oberfläche der zwischengetrockneten ersten Schicht,
d) Trocknen des beschichteten Substrats aus Schritt c).

2. Verfahren nach Anspruch 1, **dadurch gekennzeichnet, dass** die freie Oberflächenenergie 35 - 45 mN/m und der polare Anteil der freien Oberflächenenergie 3,5 - 4,5 mN/m aufweist.

3. Verfahren nach Anspruch 1 oder 2, **dadurch gekennzeichnet, dass** im Schritt a) 3 - 20 g/m$^2$, bevorzugt 7 - 14 g/m$^2$ der ersten Zusammensetzung und/oder im Schritt c) 3 - 20 g/m$^2$, bevorzugt 7 - 14 g/m$^2$ der zweiten Zusammensetzung aufgebracht werden.

4. Verfahren nach einem der vorhergehenden Ansprüche, **dadurch gekennzeichnet, dass** das Substrat ausgewählt ist aus Papier, Karton, Kunststoff oder einer Kombination daraus, bevorzugt ausgewählt ist aus Papier oder Karton aus baumfreier Zellulose.

5. Verfahren nach einem der vorhergehenden Ansprüche, **dadurch gekennzeichnet, dass** die Zwischentrocknung bei einer Temperatur von 30 - 50 °C für 0,06 - 0,6 s durchgeführt wird.

6. Verfahren nach einem der vorhergehenden Ansprüche, **dadurch gekennzeichnet, dass** das Wachs ein pflanzlicher Wachs oder eine Mischung pflanzlicher Wachse ist.

7. Verfahren nach einem der vorhergehenden Ansprüche, **dadurch gekennzeichnet, dass** das Aufbringen der ersten Schicht im Schritt a) im Flexodruckverfahren mit einer Walze durchgeführt wird.

8. Verfahren nach Anspruch 7, **dadurch gekennzeichnet, dass** die Walze an der Oberfläche eine Shore-Härte von 40 - 60 Shore A aufweist.

9. Verfahren nach einem der vorhergehenden Ansprüche, **dadurch gekennzeichnet, dass** die wässrige Polymerdispersion im Schritt a) eine wässrige Dispersion eines Copolymeren aus (Meth)acrylat und Styrol ist und/oder die wässrige Polymerdispersion im Schritt c) eine wässrige Dispersion eines Copolymeren aus (Meth)acrylat und Styrol ist.

10. Verfahren nach einem der vorhergehenden Ansprüche, **dadurch gekennzeichnet, dass** die erste Zusammensetzung einen Feststoffanteil von 25 - 50 Gew.-% aufweist, bezogen auf das Gesamtgewicht der ersten Zusammensetzung und/oder die zweite Zusammensetzung einen Feststoffanteil von 25 - 50 Gew.-% aufweist, bezogen auf das Gesamtgewicht der zweiten Zusammensetzung.

11. Verfahren nach einem der vorhergehenden Ansprüche, **dadurch gekennzeichnet, dass** nach dem Trocknen gemäß Schritt d) die Schichtdicke der ersten Schicht 3 - 6 μm beträgt und/oder die Schichtdicke der zweiten Schicht 3 - 6 μm beträgt.

12. Substrat mit Barrierebeschichtung, erhältlich nach dem Verfahren gemäß einem der Ansprüche 1 - 11.

13. Substrat mit Barrierebeschichtung, umfassend

ein Substrat,
eine unmittelbar auf der Oberfläche des Substrats aufgebrachte erste Schicht, umfassend ein Polymer und weniger als 0,5 Gew.-% Wachs, bezogen auf das Gesamtgewicht der ersten Schicht, und einer Schichtdicke der ersten Schicht von 2 - 7 μm, und
eine unmittelbar auf die erste Schicht aufgebrachte zweite Schicht, umfassend ein Polymer und 2 - 20 Gew.-% Wachs, bezogen auf das Gesamtgewicht der zweiten Schicht, und einer Schichtdicke der zweiten Schicht von 2 - 7 μm.

14. Substrat mit Barrierebeschichtung nach Anspruch 13, **dadurch gekennzeichnet, dass** das Polymer ein (Meth)acrylat-Styrol-Copolymer ist.

15. Verwendung eines Substrats mit Barrierebeschichtung nach einem der Ansprüche 12 - 14 als Verpackungsmaterial.

Europäisches
Patentamt

European
Patent Office

Office européen
des brevets

# EUROPÄISCHER RECHERCHENBERICHT

Nummer der Anmeldung

EP 23 19 3429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/348338 A1 (LIN ANSHYANG [US] ET AL) 11. November 2021 (2021-11-11) * Absätze [0001], [0019], [0024], [0031], [0033], [0034], [0054]; Abbildung 5B; Beispiele 1, 2; Tabelle 1 * ----- | 1-15 | INV. B05D1/38 B05D3/00 C08J7/043 C08J7/048 C09D125/08 |
| X | WO 2018/108315 A1 (TREOFAN GERMANY GMBH & CO KG [DE]) 21. Juni 2018 (2018-06-21) * Seite 1, Zeile 4 – Zeile 6; Beispiel B2 * ----- | 1-15 | C09D191/06 D21H19/18 D21H19/22 D21H27/10 D21H19/82 |
| X | US 5 989 724 A (WITTOSCH WILLIAM A [US] ET AL) 23. November 1999 (1999-11-23) * Spalte 1, Zeile 12 – Zeile 23; Beispiel 7 * ----- | 1-15 | |
| X | US 2015/298861 A1 (DABADIE THIERRY J L [LU] ET AL) 22. Oktober 2015 (2015-10-22) * Absätze [0002], [0021], [0028], [0032] * ----- | 1-15 | RECHERCHIERTE SACHGEBIETE (IPC) |
| A | US 5 763 100 A (QUICK JAMES R [US] ET AL) 9. Juni 1998 (1998-06-09) * Anspruch 1 * ----- | 1-15 | B05D C23D C08L |
| T | Krüss Gmbh: "Mobile Surface Analyzer-MSA User Manual", , 31. Dezember 2014 (2014-12-31), Seiten 1-22, XP093120923, Hamburg Gefunden im Internet: URL:https://www.manualslib.com/manual/2109 356/Kruss-Mobile-Surface-Analyzer.html * Seite 3 * ----- -/-- | 1-12 | C09J C08J D21H C09D |

Der vorliegende Recherchenbericht wurde für alle Patentansprüche erstellt

| Recherchenort | Abschlußdatum der Recherche | Prüfer |
|---|---|---|
| München | 19. Januar 2024 | Arz, Marius |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
 Dokument

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

**EP 23 19 3429**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | YUK S H ET AL: "Temperature dependence of the contact angle at the polymer-water interface", JOURNAL OF COLLOID AND INTERFACE SCIENCE, ACADEMIC PRESS,INC, US, Bd. 116, Nr. 1, 1. März 1987 (1987-03-01), Seiten 25-29, XP024206394, ISSN: 0021-9797, DOI: 10.1016/0021-9797(87)90093-2 [gefunden am 1987-03-01] * Tabelle 4 * | 1-12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 19. Januar 2024 | Arz, Marius |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 19 3429**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**19-01-2024**

| Im Recherchenbericht angeführtes Patentdokument | Datum der Veröffentlichung | Mitglied(er) der Patentfamilie | Datum der Veröffentlichung |
|---|---|---|---|
| US 2021348338 A1 | 11-11-2021 | BR 112022022481 A2 | 13-12-2022 |
| | | CA 3177092 A1 | 11-11-2021 |
| | | CN 115698425 A | 03-02-2023 |
| | | DE 112021002603 T5 | 29-06-2023 |
| | | FI 20225969 A1 | 31-10-2022 |
| | | GB 2610327 A | 01-03-2023 |
| | | KR 20230005992 A | 10-01-2023 |
| | | US 2021348338 A1 | 11-11-2021 |
| | | WO 2021225707 A1 | 11-11-2021 |
| WO 2018108315 A1 | 21-06-2018 | CN 110139754 A | 16-08-2019 |
| | | EP 3554829 A1 | 23-10-2019 |
| | | US 2019322429 A1 | 24-10-2019 |
| | | WO 2018108315 A1 | 21-06-2018 |
| US 5989724 A | 23-11-1999 | DE 69531658 T2 | 24-06-2004 |
| | | EP 0718437 A1 | 26-06-1996 |
| | | US 5989724 A | 23-11-1999 |
| | | US 6548120 B1 | 15-04-2003 |
| US 2015298861 A1 | 22-10-2015 | CN 104968493 A | 07-10-2015 |
| | | EP 2914430 A1 | 09-09-2015 |
| | | ES 2637842 T3 | 17-10-2017 |
| | | US 2015298861 A1 | 22-10-2015 |
| | | WO 2014070241 A1 | 08-05-2014 |
| US 5763100 A | 09-06-1998 | AU 6786494 A | 12-12-1994 |
| | | EP 0697961 A1 | 28-02-1996 |
| | | US 5763100 A | 09-06-1998 |
| | | WO 9426513 A1 | 24-11-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2714990 A1